# EUROPÄISCHE PATENTANMELDUNG

(11) **EP 3 454 271 A1**
(43) Veröffentlichungstag der Anmeldung: **13.03.2019**
(21) Anmeldenummer: 17190176.2
(22) Anmeldetag: 08.09.2017
(51) Int. Cl.: G06Q 10/08, G06Q 10/02, G05D 1/02, B60P 3/025

(54) **VERFAHREN ZUR UNTERSTÜTZUNG EINER ERBRINGUNG EINER VORDEFINIERTEN ERSTEN DIENSTLEISTUNG, EINRICHTUNG ZUR UNTERSTÜTZUNG EINER ERBRINGUNG EINER VORDEFINIERTEN ERSTEN DIENSTLEISTUNG, COMPUTERPROGRAMMPRODUKT, SIGNALFOLGE UND SERVICEMOBIL**

(71) Anmelder: VOLKSWAGEN AKTIENGESELLSCHAFT, 38440 Wolfsburg (DE)
(72) Erfinder: HÖFLICH, Sebastian, 23570 Lübeck (DE); RÖMMELER, Volker, 38154 Lauingen am Elm (DE); WEHINGER, Jan, 38114 Braunschweig (DE)

(57) **Zusammenfassung**

Die Erfindung betrifft ein Verfahren zur Unterstützung einer Erbringung einer vordefinierten ersten Dienstleistung (H1) in einem Servicemobil (15a, 15b, 15c, 15d) während einer Fahrt des Servicemobils (15a, 15b, 15c, 15d) auf einer bevorstehenden Route (A-D) umfassend die Schritte:
- Ermitteln (100) eines Bedarfes zur Erbringung der ersten Dienstleistung (H1) auf der Route (A-D),
- Automatisches (700) Bereitstellen einer für die Erbringung der Dienstleistung (H1) eingerichteten Kabine (1), nachfolgend "CAB" genannt, eines Servicemobils zur Erbringung der ersten Dienstleistung (H1) nachfolgend auf einen Zwischenstopp (A, B, C, C', D) entlang der Route (A-D).

## Beschreibung

### Stand der Technik

Die vorliegende Erfindung betrifft ein Verfahren zur Unterstützung einer Erbringung einer vordefinierten ersten Dienstleistung, eine Einrichtung zur Unterstützung einer Erbringung einer vordefinierten ersten Dienstleistung, ein Computerprogrammprodukt, eine Signalfolge und ein Servicemobil. Insbesondere adressiert die vorliegende Erfindung eine Optimierung mobiler On-Demand-Dienstleistungen und eine Übergabe zwischen diesen Dienstleistungen.

Die Fortentwicklung des Individualverkehrs schreitet derzeit rasch voran. Einerseits werden gemeinsam verwendete Fortbewegungsmittel (Car-Sharing, Pool-Fahrzeuge, etc.) immer stärker nachgefragt und professioneller angeboten. Andererseits schreitet auch die Automatisierung des Personenindividualverkehrs immer rascher voran, so dass die Insassen entsprechender Fahrzeuge die Reisezeit anderweitig nutzen können.

Dienstleistungen hingegen werden bis heute üblicherweise in stationären Einrichtungen (z.B. "Ladengeschäften") angeboten. Anbieter von stationären Dienstleistungen stehen bislang vor den Problemen, dass sie ausschließlich hohe Umsätze in teuren Toplagen erzielen können, die Skalierung schwierig ist, Mietverträge eine langfristige Ortsbindung bewirken und die Investitionskosten und das unternehmerische Risiko hoch sind.

Endkunden, welche die Dienstleistung gern erleben wollen, haben mitunter lange Fahrwege und hohe Kosten für die stationären Dienstleistungen auf sich zu nehmen. Folglich verbringt der Endkunde nicht nur die Fahrzeit zum Arbeitsplatz, sondern zusätzlich die Zeit zum jeweiligen Dienstleister (z.B. Restaurant, Anwalt, Behörde) im Fahrzeug. Aktuell verbringt ein Deutscher ca. 60 Min. pro Tag im Auto. Zudem können viele ältere Menschen nicht mehr fahren. Mit dem autonomen Fahren ist das wieder möglich.

Spartenspezifisch sind auch Ansätze bekannt, bei welchen die Dienstleistung zum Kunden kommt. Beispielsweise werden Frisierdienstleistungen zu Hause angeboten oder fahrende Einzelhändler (der "Eiermann") machen Station in Wohngegenden, um dort Waren abzusetzen.

Vereinzelt ist bereits die Erbringung von Dienstleistung für Fahrgäste bekannt. Beispielsweise können gastronomische Dienstleistungen in Zügen des Fernverkehrs in Anspruch genommen oder audiovisuelle Inhalte ("Bord-Kino") konsumiert werden.

DE 20 2015 106 556 U1 offenbart eine fahrbare Vorrichtung zur mobilen Bereitstellung unterschiedlicher Serviceleistungen in modularer Bauweise, umfassend eine Antriebseinheit, Energiespeichereinheit und/oder dazugehörige Elektronik. Ein austauschbares Servicemodul, welches beispielsweise ein Zapfhahnmodul, ein Kühlmodul, ein Eismodul oder eine Nassstrecke umfassen kann, ist reversibel über korrespondierende Arretierungspunkte mit einem Fahrgestell verbunden.

UBER nutzt mittlerweile Fahrradkuriere, um Essen direkt ins Fahrzeug zu liefern. So können zumindest die Ergebnisse gastronomischer Dienstleitungen bei minimalen Mehrkosten in herkömmlichen Fahrzeugen genossen werden. Die Fahrzeuge selbst hingegen sind nicht service-spezifisch ausgestaltet. Zudem wird die Dienstleistung nicht im Fahrzeug erbracht, sondern endet an der Fahrzeugtür mit der Übergabe des Essens.

www.luxurymobilebarbershop.com bietet einen mobilen Frisiersalon, bei welchem der Kunde den Ort der Dienstleistung (Bsp. Flughafen Parkplatz) definiert und der Fahrer den mobilen Friseursalon zu dem definierten Ziel fährt, um dort die Dienstleistung zu erbringen.

Mobile Dienstleistungen bieten bereits heute On-Demand Services besonders im Luxus-Segment an. Diese bieten ihren Endkunden Ortsunabhängigkeit, Zeitersparnis und Exklusivität, meist jedoch zu einem Preis, welcher für ein breites Publikum zu hoch ist. Mobile Dienstleistungen sind heute wegen hoher Investitionskosten und mangelnder Auslastung meist im Luxus-Segment zu finden. Gründe hierfür sind, dass das Fahrzeug zum Umbau gekauft werden muss, viel Handarbeit für den Umbau notwendig ist, wenige Standard-Bauteile zur Verfügung stehen, der Service-Anbieter lange Wege zwischen den Kunden zu fahren hat und schließlich das operative Management (Bezahlung, Buchung, Steuern) selbstständig zu übernehmen hat. Zudem sind umfangreiche Modifikationen von Fortbewegungsmitteln stets mit kostspieligen Einzelabnahmen der zuständigen Stellen verbunden.

Das sich insgesamt herauskristallisierende Problem ist, dass das Transportwesen ineffizient hinsichtlich der Breite des allgemeinen Konsumbedarfs und/oder der Dienstleistungen des täglichen Lebens ist. Ganz besonders gilt dies, wenn eine Person eine längere Route zurücklegen möchte. Ein Lösungsvorschlag im Personentransportwesen für längere Strecken ist hier zum Beispiel mit dem Volkswagenkonzept "MOIA" gegeben. Dies konzentriert sich auf Transportleistungen für mehrere Personen gleichzeitig für eine längere Strecke. Auf den letzten Kilometern bis zum Zielort steigt die jeweilige Person auf ein Einzelfahrzeug um. Hierbei sind allerdings Nutzungen wichtiger Dienstleistungen und von Bedarfsgegenständen des täglichen Lebens (z.B. Frisör, Fitnessstudio, Duschen etc.) nicht berücksichtigt. Hierfür muss Extrazeit vor oder nach der Fahrt eingeplant werden.

Ausgehend vom vorgenannten Stand der Technik ist es eine Aufgabe der vorliegenden Erfindung, ein effizientes Verfahren zur preiswerten Bereitstellung verschiedener mobiler bedarfsgerechter Dienstleistungen für eine bevorstehende Route anzugeben. Weiterhin ist es Aufgabe der vorliegenden Erfindung, eine Einrichtung zur Unterstützung derartiger Dienstleistungen, ein Computerprogrammprodukt, eine Signalfolge und ein Servicemobil diesbezüglich bereitzustellen.

### Offenbarung der Erfindung

Die vorgenannte Aufgabe wird erfindungsgemäß durch die Gegenstände der unabhängigen Ansprüche gelöst.

Die Erfindung basiert auf dem Grundgedanken, dass die Konsumbereitschaft von Fahrgästen grundsätzlich höher ist, als wenn dieselbe Person frei verfügbare Zeit für den Konsum einer Dienstleistung aufwenden muss.

Um den Konsum von Dienstleistungen während der Fortbewegung besser auf die Anforderungen des Service-Erbringers und des Kunden anzupassen, fußt die vorliegende Erfindung beispielsweise auf dem Konzept, Fahrzeugplattformen mit allen für ein autonomes Fahren notwendigen technischen Einheiten, wie Fahrwerk, Antriebseinheit usw. bereitzustellen, welche bedarfsweise mit auf eine Dienstleistungserbringung während der Fahrt zugeschnittenen Fahrgastzellen verbindbar sind. Die Fahrgastzellen werden im Rahmen der vorliegenden Offenbarung als "CABs" bezeichnet. "CAB" steht für "Kabine" oder "Cabin".

Anders ausgedrückt ist eine CAB ein für einen spezifischen Service oder eine Servicegruppe angepasster Fahrzeugaufbau, der alle Schnittstellen bereithält, um die zur Dienstleistungserbringung erforderliche Einrichtung zu beherbergen und zu betreiben.

Die CAB kann daher als mechanische Einheit verstanden werden, welche als solche über vordefinierte Schnittstellen mit der Fahrzeugplattform/der Fahrlafette verbunden werden kann. Die Schnittstellen sorgen für eine mechanisch reversible, jedoch zuverlässige Verbindung zwischen der CAB und der Fahrlafette. Die Schnittstellen können zur Energieübertragung, insbesondere elektrischer Energie, zwischen der CAB und der Fahrlafette eingerichtet sein. Auch diese Schnittstellen sind reversibel ausgestaltet. Insbesondere können weitere Betriebsmittel (Flüssigkeiten), mechanische Energieübertragungsmittel, z.B. Wellen, Zahnräder, o.ä. für eine mechanische Energieübertragung von der Fahrlafette an die CAB, sowie Funkverbindungen und/oder eine datentechnische Verknüpfung zwischen der einzelnen CAB und der Fahrlafette sowie ihren Bausteinen vorgesehen sein. Für alle informationstechnischen Verknüpfungen der Fahrlafette mit der CAB bieten sich als Schnittstellen beispielsweise elektrische und/oder optische Leitungen, insbesondere Bussysteme, an.

Um eine kostengünstige, rasche und wenig fehleranfällige Konfiguration einer aus Fahrlafette und CAB bestehenden mobilen Einheit (auch "Servicemobil") zu ermöglichen, kann vorgesehen sein, dass sämtliche Schnittstellen zwischen der CAB und der Fahrlafette in im Wesentlichen identischer Richtung zueinander korrespondierend angeordnet sind. Mit anderen Worten kann eine CAB in einer ersten Richtung mechanisch mit der Fahrlafette in Eingriff gebracht werden, wobei beispielsweise Schienen für eine formschlüssige Verbindung zwischen CAB und Fahrlafette sorgen. Dieselbe Richtung kann für die energetische Verbindung zwischen der Fahrlafette und der CAB vorgesehen sein. Insbesondere kann sichergestellt werden, dass eine korrekte mechanische Verbindung zwischen der Fahrlafette und der CAB automatisch zu einer korrekten energetischen Verbindung der Fahrlafette mit der CAB führt. Entsprechendes kann für die Schnittstellen zur Betriebsmittelübertragung gelten. Sofern auch Daten zwischen der CAB und der Fahrlafette (z.B. bidirektional) auszutauschen sind, können beispielsweise leitungsvermittelnde Schnittstellen entsprechend angeordnet sein und bei der Verbindung zwischen der Fahrlafette und der CAB automatisch geschlossen werden. Zumindest können mehrere Schnittstellen, insbesondere wesensgleiche standardisierte Schnittstellen, räumlich zusammengefasst sein und reversibel, jedoch gegen ein unerwünschtes Lösen gesichert, an korrespondierenden Positionen an der Fahrlafette/der CAB angeordnet sein.

Durch die oben genannte Standardisierung können für die Erbringung von Dienstleistungen während der Fahr erforderliche Randbedingungen geschaffen werden, welche eine erhebliche Kostenreduzierung und einen bislang unerreichten Individualisierungsgrad von Fahrzeugen ermöglichen. Während die CABs den Dienstleistern vordefinierte Rahmen bieten, um ihre Dienstleistung sicher und anwendertauglich anzubieten, sorgt die Fahrlafette für effiziente, komfortable, rasche und zeitsparende Fortbewegung, insbesondere im Falle automatisch fahrfähiger Fahrlafetten. Hierdurch wird älteren oder fahruntüchtigen Personen sowie Kindern neben dem Reisen eine individuelle Dienstleistung geboten.

Das oben genannte Konzept aus Fahrlafette und CAB ermöglicht die Erbringung von individualisierten Dienstleistungen unterwegs, wobei das beschriebene Konzept die physische Plattform darstellt, welche in Verbindung mit einer digitalen Vermittlungsplattform (Server) potentiellen Kunden zugänglich gemacht wird. Die hier offenbarte Technologie beschreibt das Zusammenspiel der einzelnen Komponenten und Akteure in dem Plattform-Ökosystem. Es ermöglicht die freie Zeit, die durch das autonome Fahren bzw. Taxifahrten entsteht, optimal zu nutzen und zu monetarisieren.

In dem Plattform-Ökosystem werden Probleme verschiedener Akteure gelöst. Dabei ist zwischen Endkunden (nutzen Services während der Fahrt), Service-Anbietern (bieten Services während der Fahrt an wie z.B. Anwälte) und Microservice-Providern (stellen Bausteine zur Ausstattung der Fahrzeuge bereit) zu unterscheiden. Die Bausteine müssen nicht physisch sein, sondern könnten auch Software-Bausteine sein, z.B. eine Darstellung eines Restaurant-Menüs auf einem Display.

Die Vermittlung aus Fahrlafette und CAB bestehender Servicemobile kann beispielsweise über einen Server in Verbindung mit vom Kunden/Dienstleistungsanbieter verwendeten (mobilen) Drahtloskommunikationsendgeräten ("Anwenderendgerät") vorgenommen werden. Eine Applikation stellt hierbei die Schnittstelle zum Endkunden dar. Der Endkunde bucht über die Applikation die mobilen On-Demand-Services. Dazu definiert der Endnutzer Startpunkt, Ziel, Startzeit und Art der während der Fahrt zu erbringenden Dienstleistung. Endkunden können weitere Aufgaben über die Applikation erledigen wie z.B. Anfragen, Darstellungen der Suchergebnisse, Buchen, Bewerten sowie Bezahlvorgang.

Der Serviceanbieter kann ein eigenes Profil digital bereithalten, mittels dessen sich der Endnutzer über die angebotenen Services, Kundenmeinungen etc. informieren kann. Entscheidet sich der Endnutzer für den Bezug eines Services, wird seine Anfrage auf dem Anwenderendgerät des mobilen Serviceanbieters oder in dessen Fahrzeug angezeigt. Der Serviceanbieter kann die Anfrage akzeptieren, wodurch der kombinierte Beförderungs-/Dienstleistungsvertrag zustande kommt.

Im Rahmen der vorliegenden Offenbarung erbringbare Dienstleistungen lassen sich beispielsweise in die folgenden Ausprägungen/Kategorien gliedern:
- Die Dienstleistung kann von einem Menschen oder unbemannt erbracht werden (Friseur gegenüber Multimedia-Darbietung)
- individualisierte CAB oder Massenware (z.B. generisches Restaurant gegenüber systemgastronomischer Ausgestaltung).

Zusammengefasst umfasst die der vorliegenden Erfindung zugrundeliegende Fahrzeugarchitektur zwei Komponenten: Die zur Fortbewegung erforderliche Komponente wird als "Fahrlafette" bezeichnet, in welcher sich die Technik zum autonomen Fahren befinden kann. Zudem wird der Fahrzeugaufbau (CAB) verwendet, der alle Schnittstellen bereithält, um die zur Dienstleistungserbringung erforderliche Einrichtung zu beherbergen und zu betreiben. Die aus den vorgenannten Komponenten bestehenden Fahrzeuge/Fortbewegungsmittel werden auch als "Servicemobil" bezeichnet. Sie könnten auch als "physische Apps auf Rädern" bezeichnet werden, da sie hinsichtlich ihres Funktionsumfangs so vielfältig sind, wie durch Applikationen individualisierte SmartPhone-Plattformen.

Im Rahmen eines ersten Aspekts der vorliegenden Erfindung wird gemäß Anspruch 1 ein Verfahren zur Unterstützung einer Erbringung einer vordefinierten ersten Dienstleistung in einem wie oben definierten Servicemobil während einer Fahrt dieses Servicemobils auf einer bevorstehenden Route angegeben. Eine derartige Dienstleistung kann beispielsweise ein mobiles Solarium, eine mobile Duscheinrichtung und/oder eine mobile Gastronomieeinheit innerhalb des Servicemobils darstellen. Dadurch wird die Erlebnisqualität bei mobilen On-Demand-Services in einem Fahrzeug gesteigert.

In einem ersten Schritt des erfindungsgemäßen Verfahrens wird ein Bedarf zur Erbringung einer ersten Dienstleistung ermittelt. Dies geschieht beispielsweise über eine digitale Service-Bundle Datenbank, mit welcher durch ein Anwender-Endgerät (z.B. ein SmartPhone) kommuniziert werden kann. Der Anwender kann dabei als eine erste Dienstleistung z.B. ein "Solarium" für seine bevorstehende Route auswählen. Hierdurch kann der Anwender den Zeitbedarf der bevorstehenden Route für die reine Fahrzeit mit dem Zeitbedarf einer Dienstleistung vereinheitlichen.

Darüber hinaus können beispielsweise zusätzliche Dienstleistungen mit der ersten Dienstleistung von einem Anwender (oder auch Endnutzer genannt) je nach Bedarf kombiniert werden. Diese kombinierten Dienstleistungen werden als "Service-Bundle" oder "Dienstleistungsbündel" bezeichnet. Die Inhalte und Reihenfolge der Dienstleistungen können vom Endnutzer bei entsprechender Verfügbarkeit festgelegt werden. Weiterhin kann die Reihenfolge offen gelassen werden und das System, z.B. eine zentrale Datenbank des Serviceproviders, legt diese vor oder gar während der Fahrt auf der bevorstehenden Route fest. Die vom Endnutzer festgelegten Inhalte und Reihenfolgen können beispielsweise über eine drahtlose Übertragung an einen Server übermittelt werden. Beispielsweise können auf dem Server implementierte Programme die Dienstleistungen ermitteln und auslesen und in Bezug auf die entsprechenden Servicemobile weiterverarbeiten und übermitteln.

In einem weiteren Schritt erfolgt ein automatisches Bereitstellen einer für die Erbringung der Dienstleistung eingerichteten CAB des Servicemobils zur Erbringung der ersten Dienstleistung nachfolgend auf einen Zwischenstopp entlang der Route.

Für den Zwischenstopp entlang der Route sind zum Beispiel "Handover-Orte" vorstellbar, zu denen sich der Anwender auf der Route begeben muss. Ein Handover-Ort kann beispielsweise bei einer einzelnen Dienstleistung der Ort sein, an dem der Endkunde in das Servicemobil ein- bzw. aussteigt und/oder, wenn mehrere Dienstleistungen mit mehreren Servicemobilen in Anspruch genommen werden, der Ort, an dem der Endnutzer das Servicemobil wechselt. Diese Szenarien werden allesamt "Handover" genannt. Bei einer einzelnen und/oder der ersten Dienstleistung auf der bevorstehenden Route können der Handover-Ort z.B. die Haustüre des Endnutzers (beim Einsteigen) und das Ziel des Endnutzers (beim Aussteigen) sein. Weiterhin kommen beispielsweise öffentliche Parkplätze infrage. Darüber hinaus ist es beispielsweise möglich, dass von einer vorherigen, in dem Service-Bundle enthaltenen Dienstleistung, ein Handover an das Servicemobil der ersten ausgewählten Dienstleistung, d.h. von Servicemobil zu Servicemobil stattfindet (z.B. von einem Gastronomie-Servicemobil an ein Solarium-Servicemobil). Auch ein Handover von dem Servicemobil der ersten Dienstleistung an ein weiteres Servicemobil ist möglich (z.B. von einem Solarium-Servicemobil an ein Rechtsberatungs-Servicemobil).

Ein Servicemobil, das beispielsweise mit einem Solarium in seiner CAB ausgestattet ist, gelangt, insbesondere automatisiert, zu einem derartigen Handover-Ort und der Anwender steigt beispielsweise von einem Zug oder einem Bus in das Servicemobil um, wenn nur eine einzelne Dienstleistung gebucht ist. Ein Handover nach der ersten Dienstleistung kann bezüglich eines Umsteigens in ein anderes Servicemobil bzw. dessen CAB direkt von Tür zu Tür stattfinden.

Ein Handover-Ort kann in einer Handover-Ort-Datenbank enthalten sein, welche ein Streckennetz enthält, welches beispielsweise bundesweit, landesweit oder innerhalb einer Stadt ausgestaltet sein kann. Dies hängt von der bevorstehenden Route ab. Das Streckennetz ist hierbei in Segmente gegliedert und jedem Segment können gewisse Eigenschaften für seine Eignung als Handover-Ort zugewiesen sein wie beispielsweise ein Straßenausbaugrad, ein Verkehrsaufkommen und/oder eine zeitliche Erreichbarkeit. Generell kann ein Handover an jedem Ort in dem Streckennetz durchgeführt werden. Die Eigenschaften der Handover-Orte können aus verschiedenen technischen Systemen gespeist (z.B. aus Flotten-Fahrzeugsensoren der Servicemobile) werden. Hierbei können Ereignisse Einfluss auf die Eigenschaften eines Ortes innerhalb eines Segments im Hinblick auf seine Attraktivität als Handover-Ort (z.B. Unfälle, Wetter oder Events) nehmen. Weiterhin kommen insbesondere Zyklen wie Jahreszeiten und/oder Uhrzeiten als solche Parameter infrage, welche die Eignung beeinflussen.

Hierbei können die Eigenschaften des Streckennetzes anhand von Sensoren, wie etwa Radarsensoren, der aktiven Fahrzeug-Flotte der jeweiligen Servicemobile vermessen werden. Weiterhin können Informationen über das Streckennetz auch aus externen Systemen, wie GPS (z.B. bei Staus) empfangen werden und/oder und über eine zentrale Handover-Ort-Engine verwaltet werden, die mit jedem Servicemobil der Fahrzeug-Flotte und mit der Service-Bundle-Datenbank kommuniziert.

Die Handover-Ort-Engine kann die erhaltenen Sensordaten aus den Fahrzeugen und/oder der externen Systeme verarbeiten und auf deren Basis die Eigenschaften eines Ortes für ein Handover kalkulieren. Hierbei kann die Bestimmung des optimalen Ortes für das Handover anhand eines spezifischen Service-Bundles unter Berücksichtigung folgender Kriterien vorgenommen werden:
- Eignung des Handover-Ortes,
- Verlauf der Services innerhalb des Service-Bundles,
- Dauer der bevorstehenden Route; und/oder
- Endnutzerpräferenzen

Die jeweilige Priorisierung dieser Kriterien kann von Endnutzeranfrage zu Endnutzeranfrage variieren. Bei Interessenskonflikten kann das System des Serviceproviders eine gangbare Lösung entwickeln, um Verzögerungen zu vermeiden.

Für das automatisierte Bereitstellen müssen beispielsweise die Kriterien für die Booking-Engine erfüllt sein. Die Booking-Engine kann als eine Instanz der Service-Bundle Datenbank auf einem Server des Providers ausgestaltet sein und legt Filter für den Endnutzer fest, wenn auf einer bevorstehenden Route bei Eingabe von mindestens zwei vordefinierten Punkten Mindestanforderungen nicht erfüllt werden. Diese Mindestanforderungen lauten:
- Notwendige CAB bzw. Servicemobil ist verfügbar; und
- Auf der Strecke stehen Handover-Orte mit den notwendigen Eigenschaften zur Verfügung.

Wenn die Kriterien erfüllt sind und das Service-Bundle gebucht ist und die Handover-Orte festgelegt sind, kann in der Booking-Engine eine Preiskalkulation für ein Service-Bundle oder eine einzelne Dienstleistung erfolgen. Hierbei werden insbesondere die zeitliche Verfügbarkeit der CABs bzw. des Servicemobils und/oder die Fahrtdauer der CABs bzw. der Servicemobile zum Handover-Ort berücksichtigt.

Optional kann vorgesehen sein, dass alle Instanzen des Serviceproviders, d.h. Service-Bundle Datenbank, Handover-Ort-Engine, Booking-Engine, Preiskalkulation und Fahrzeug-Flotte miteinander kommunizieren. Unterschiedliche Services können auch über unterschiedliche Provider angeboten werden, wobei die Kommunikation zwischen diesen Providern allerdings auch über eine zentrale Datenbank verlaufen kann.

Dementsprechend muss der Endnutzer nicht von seiner Route für die Dienstleistung abweichen und die Dienstleistung auch nicht für die ganze Route nutzen, falls die Route z.B. länger als eine hier beispielhaft genannte Bräunungseinheit im Solarium der CAB ist.

Durch den breiten Endkunden- bzw. Anwenderkreis, welcher durch das erfindungsgemäße Verfahren angesprochen wird, kann zugleich die Auslastung der Dienstleistungsanbieter gesteigert werden. Dadurch sind auch preiswertere Endkundenangebote möglich.

Die Unteransprüche zeigen bevorzugte Weiterbildungen der Erfindung.

In einer bevorzugten Weiterbildung der vorliegenden Erfindung wird ein Bedarf zur Erbringung einer zweiten Dienstleistung auf der bevorstehenden Route ermittelt. Dies kann zum Beispiel über die Service-Bundle Datenbank erfolgen. Aus der ersten und der zweiten Dienstleistung entsteht somit ein Service-Bundle. Hier ist eine digitale To-Do-Liste für den CAB Serviceanbieter erstellt worden. Hierbei wird die Reihenfolge der Dienstleistung für die erste Route und die zweite Route automatisch festgelegt. Beispielsweise enthält die erste CAB des ersten Servicemobils die erste Dienstleistung und die zweite CAB des zweiten Servicemobils die zweite Dienstleistung. Somit kann der Benutzer mindestens zwei Dienstleistungen durch das oben beschriebene intelligente Handover-System auf einer Route benutzen und kann somit den Zeitbedarf einer Route mit dem Zeitbedarf zweier Dienstleistungen vereinheitlichen, d.h. die Zeit effizient nutzen.

In einer bevorzugten Ausführungsform werden die erste Dienstleistung in einer ersten CAB und die zweite Dienstleistung in einer zweiten CAB erbracht. Hierdurch werden die Fahrzeitauslastung und Serviceerbringung auf längeren Strecken verbessert.

In einer weiteren bevorzugten Ausgestaltung des erfindungsgemäßen Verfahrens werden die erste CAB und die zweite CAB logisch miteinander Verknüpft. Dies kann beispielsweise durch die eingangs genannte Handover-Engine erfolgen. Die erste CAB sendet vor dem Handover zum Beispiel Informationen zum Servicefortschritt (z.B. aktuelle Position, Route, Fortschritt des Services) an die zweite Folge-CAB. Beim Handover am Handover-Ort verlässt der Benutzer schließlich die erste CAB und betritt die zweite CAB.

Insbesondere kann hierbei eine umgebungssensorische Nahfeldnavigation, damit beide Servicemobile an dem Handover-Ort aneinander heranfahren, in den CABs implementiert sein. In anderen Worten kommunizieren die CABs am Handover-Ort miteinander.

Weiterhin kann ein automatisches Anordnen einer geöffneten Tür der ersten CAB an einer geöffneten Tür der zweiten CAB beim Handover-Ort durch diese Nahfeldnavigation automatisiert werden. Somit ist die Diskretion für den Endnutzer gewährleistet. Beispielsweise kann ein leichtbekleideter Endnutzer, der gerade das Solarium bzw. die Solarium-CAB als erste CAB verlässt, in eine Dusch-CAB als eine zweite CAB einsteigen. Hierbei ist die Diskretion des Endnutzers, bzw. die Übergabeeffizienz maximal gewahrt, da ein zwischenzeitliches Ankleiden so entfallen kann.

In einer anderen vorteilhaften Weiterbildung des erfindungsgemäßen Verfahrens wird die Reihenfolge der Dienstleistungen in Abhängigkeit einer Verfügbarkeit für die erste und zweite Dienstleistung eingerichteter CABs entlang der Route festgelegt. Hierdurch kann die Servicequalität anhand räumlich verfügbarer CABs optimiert werden, ohne dass der Endnutzer Zeitverluste auf seiner Route hinnehmen muss.

Weiterhin kann innerhalb dieser Weiterbildung die Reihenfolge der Dienstleistungen anhand einer erforderlichen Vorbereitungszeit zur Erbringung der zweiten Dienstleistung festgelegt werden. Beispielsweise kann die erste Dienstleistung darin bestehen, dass der Endnutzer sich duschen kann, was eine kurze Vorbereitungszeit benötigt, während die zweite Dienstleistung eine Rechtsberatung innerhalb einer Rechtsanwalts-CAB ist und der Rechtsanwalt zunächst Zeit benötigt, um sich auf den Sachverhalt des Endnutzers vorzubereiten. Hierbei können insgesamt Fahrabschnitte reduziert werden, in denen kein Service erbracht wird bzw. erbracht werden kann.

Zudem kann innerhalb dieser Weiterbildung die Reihenfolge der Dienstleistungen anhand der Natur der Dienstleistungen, welche beispielsweise aufeinander aufbauen, festgelegt werden. Dies ist beispielsweise bei einer Gastronomie-CAB gefolgt von einer Kino-CAB der Fall. Weiterhin kann die Reihenfolge anhand der geschätzten Dauer für die Dienstleistung festgelegt werden. Somit wird dem Endnutzer eine längere "Leerlaufzeitspanne" erspart.

Weiterhin kann die Festlegung der Reihenfolge auch von einer erforderlichen Infrastruktur und/oder einer momentanen verkehrsmäßigen Streckeneigenschaft, wie etwa Stau und/oder Baustellenaufkommen, eingerichtet werden.

In einer weiteren vorteilhaften Ausgestaltung des erfindungsgemäßen Verfahrens wird der Zwischenstopp für einen Handover anhand einer Verfügbarkeit einer Kommunikationsinfrastruktur und/oder einer Lärm und/oder Lichtemission und/oder Wärmeemissionen, wie etwa Temperatur, und/oder Luftfeuchtigkeit, wie etwa Regen oder Nebel, und oder Emissionen in Abhängigkeit von der Uhrzeit, Jahreszeit und/oder Personenaufkommen entlang der Route gekennzeichnet. Hierbei kann das Handover bzw. der Zwischenstopp am Handover-Ort für den Anwender angenehm und unaufdringlich gestaltet werden. Weiterhin kann der Anwender, sofern erforderlich, sich bequem ein Taxi bestellen, falls er für den restlichen Weg eines benötigt.

In einer weiteren vorteilhaften Ausgestaltung werden ein geeigneter Ort und/oder ein geeigneter Zeitpunkt für einen Wechsel eines Konsumenten bzw. Endnutzers der ersten Dienstleistung in die zweite CAB ermittelt. Hierbei findet ein Handover des Endnutzers von der Erbringung der ersten Dienstleistung zur Erbringung einer zweiten Dienstleistung auf der Route statt. Dies kann - unter Berücksichtigung der Eigenschaften des Handover-Ortes der vorigen Ausführungsformen - beispielsweise ein öffentlicher Parkplatz, insbesondere ein Autobahnparkplatz, sein. Wichtig hierbei ist, dass der Handover-Ort möglichst auf der kürzesten und/oder schnellsten Route des Konsumenten bzw. Endnutzers liegt und somit wenig Zeit verloren geht.

In einer anderen vorteilhaften Ausgestaltung ist die erste Dienstleistung eine UV- und/oder IR-Bestrahlung eines Anwenders bzw. Endnutzers und die zweite Dienstleistung eine Körperreinigung des Anwenders. Demzufolge ist es möglich, dass die erste Dienstleistung eine Nagelpflege eines Anwenders und die zweite Dienstleistung eine Körperreinigung des Anwenders umfasst. Diese Varianten können beispielsweise mit einer Nagelstudio-CAB als erste CAB und einer Dusch-CAB als zweite CAB realisiert werden. Hierbei sind kosmetische und hygienische Bedürfnisse des Nutzers modular realisierbar. Weiterhin kann die Erlebnisqualität durch derartige Servicekombinationen verbessert werden.

In einer nächsten vorteilhaften Ausgestaltung der vorliegenden Erfindung wird eine Verzögerung eines potentiellen Beginns der Erbringung der ersten Dienstleistung ermittelt, wenn das Servicemobil beispielsweise im Stau steht. Im Ansprechen erfolgt ein automatisches Festlegen eines aktualisierten Zwischenstopps entlang der Route. Hierdurch kann sich die zweite CAB für den Handover darauf "einstellen", dass sich die Services nicht miteinander überschneiden bzw. die zweite CAB ungenutzt zu lange an einem Ort verweilt und z.B. nicht unnötig wartet.

Die folgenden weiteren Aspekte der vorliegenden Erfindung enthalten gleichermaßen die vorteilhaften Merkmale und Ausgestaltungen, die technischen Effekte und die Vorteile des ersten Aspekts der vorliegenden Erfindung.

Gemäß einem zweiten Aspekt betrifft die vorliegende Erfindung eine Einrichtung zur Unterstützung einer Erbringung einer vordefinierten ersten Dienstleistung in einem Servicemobil während einer Fahrt des Servicemobils auf einer bevorstehenden Route. Die Einrichtung umfasst einen Dateneingang, eine Auswerteeinheit und einen Datenausgang. Die Auswerteeinheit ist eingerichtet in Verbindung mit dem Dateneingang einen Bedarf zur Erbringung der ersten Dienstleistung zu ermitteln, beispielsweise anhand eines Service-Bundles. In Verbindung mit dem Datenausgang kann die Auswerteeinheit automatisch eine für die Erbringung der Dienstleistung eingerichtete CAB eines Servicemobils zur Erbringung der ersten Dienstleistung nachfolgend auf einen Zwischenstopp der CAB entlang der Route bereitstellen. Als derartige Einrichtung kommt beispielsweise der Server des Serviceproviders infrage. Weiterhin kann eine derartige Einrichtung auch in der CAB implementiert sein.

Gemäß einem dritten Aspekt der vorliegenden Erfindung wird ein Computerprogrammprodukt bereitgestellt, das Instruktionen umfasst, welche, wenn sie auf einer Auswerteeinheit einer Einrichtung gemäß dem zweiten Aspekt ausgeführt werden, die Einrichtung veranlassen, die Schritte des erfindungsgemäßen Verfahrens auszuführen. Die Instruktionen können beispielsweise an eine Handover-Ort-Engine und/oder an eine Service Engine und/oder an eine Booking Engine übertragen werden. Somit lassen sich Instruktionen auf der Einrichtung besonders einfach implementieren.

Gemäß einem vierten Aspekt der vorliegenden Erfindung wird eine Signalfolge bereitgestellt, welche Instruktionen repräsentiert. Die Instruktionen veranlassen, wenn sie auf einer Auswerteeinheit einer Einrichtung ausgeführt werden, die Einrichtung die Schritte des erfindungsgemäßen Verfahrens auszuführen. Die Instruktionen können beispielsweise an die Handover-Ort-Engine und/oder an die Service Engine und/oder an die Booking Engine übertragen werden.

Gemäß einem fünften Aspekt betrifft die vorliegende Erfindung ein Servicemobil, insbesondere umfassend eine Fahrlafette, und eine reversibel mit der Fahrlafette verbundene dienstleistungsspezifisch ausgestaltete Fahrgastzelle, welche eine Einrichtung gemäß dem zweiten Aspekt der Erfindung aufweist. Weitere Ausführungen zu dem erfindungsgemäßen Servicemobil finden sich in dem Anfangsteil der Erfindungsbeschreibung.

### Kurzbeschreibung der Zeichnung

Nachfolgend werden Ausführungsbeispiele der vorliegenden Erfindung anhand der beigefügten Zeichnungen im Detail beschrieben. In den Zeichnungen ist:
- Figur 1: eine Prinzipskizze, veranschaulichend im Rahmen der vorliegenden Erfindung verwendbare Ausführungsbeispiele für CABs in Verbindung mit einer Fahrlafette, um ein Servicemobil zur Realisierung der vorliegenden Erfindung zu erzielen,
- Figur 2: eine schematische Darstellung eines Plattform-Ökosystems zur Veranschaulichung von Informationsflüssen bei der Realisierung der vorliegenden Erfindung,
- Figur 3: eine schematische Darstellung einer Fahrlafette, zweier CABs und ihrer gegenseitigen Schnittstellen gemäß einem Ausführungsbeispiel der hier offenbarten Technologie,
- Figur 4: ein Flussdiagramm des erfindungsgemäßen Verfahrens, und
- Figur 5: eine Ausführungsform eines "Wellness-Service-Bundles" auf einer bevorstehenden Route.

### Ausführungsformen der Erfindung

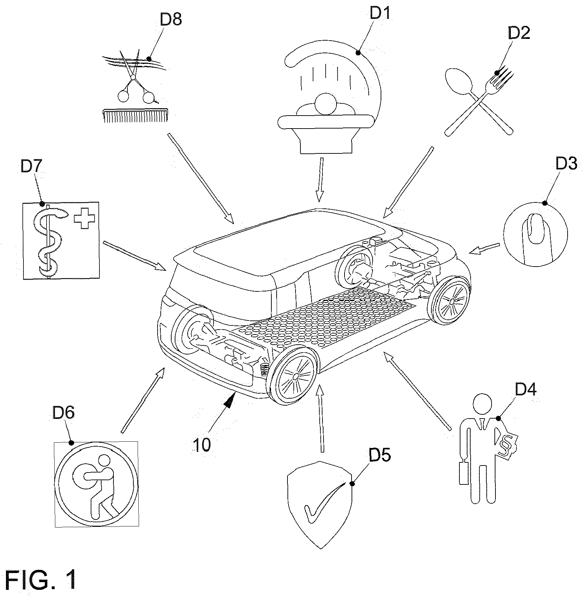

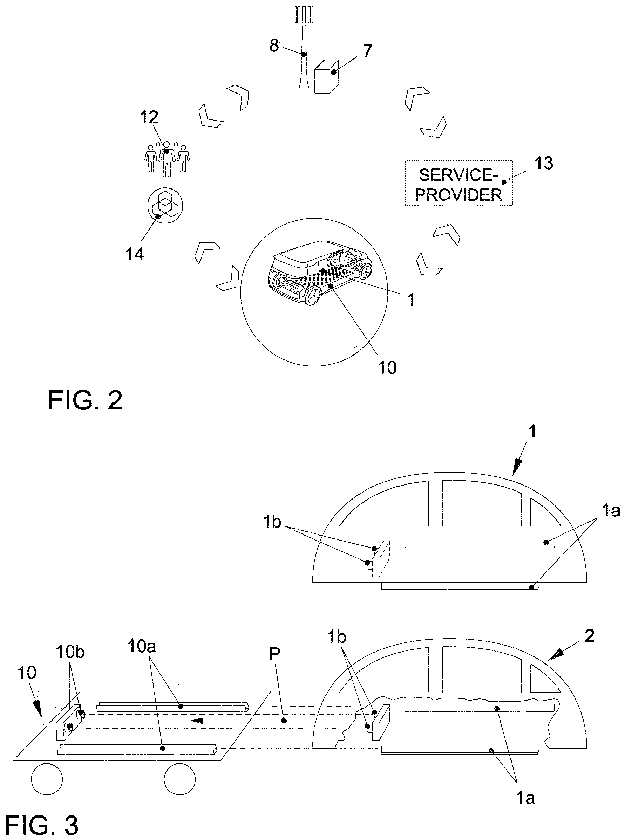

Figur 1 zeigt eine schematische Darstellung einer Fahrlafette 10 eines Servicemobils gemäß einem Ausführungsbeispiel der hier offenbarten Technologie. Die Fahrlafette bringt dabei sämtliche Merkmale mit, welche für die Fortbewegung, insbesondere die automatische Fortbewegung, erforderlich sind. Lediglich beispielhaft seien das Fahrwerk, der Antriebsstrang, der Energiespeicher, Längs-/Querführungslogik und -einrichtungen, Außenbeleuchtung, etc. Im Rahmen der vorliegend offenbarten Technologie werden (nicht dargestellte) CABs verwendet, um die Fahrlafette zur Erbringung einer jeweiligen Dienstleistung D1 bis D8 spezifisch einzurichten. Beispielsweise kann eine Bestrahlungs- und/oder Bräunungseinrichtung D1 in Form einer CAB mit der Fahrlafette 10 verbunden werden, um die Dienstleistung "Bräunung" anbieten zu können. Beispielsweise können eine UV-Bestrahlungseinheit und/oder eine Bräunungsdusche enthalten sein. Um gastronomische Dienstleistungen D2 erbringen zu können, kann eine Restaurant-CAB mit der Fahrlafette 10 verbunden werden. Die Zubereitung von Speisen und der Verzehr derselben kann durch die Einrichtung der CAB ermöglicht werden. Eine Kosmetik- bzw. Nagelpflege-Dienstleistung D3 kann beispielsweise erfordern, dass die CAB besondere Werkbänke, eine Absauganlage zum raschen Austausch der Innenraumluft und besonders helle Beleuchtungseinrichtungen (sog. Spots) aufweist. Zur Erbringung von Rechtsberatungsdienstleistungen D4 können eine Bibliothek und/oder mindestens zwei Sitzgelegenheiten in einer entsprechend ausgestalteten CAB vorgesehen sein. Entsprechendes gilt für eine Versicherungsberatungs-Dienstleistung bzw. Finanzberatungs-Dienstleistung D5. Insbesondere können hierbei Video-Konferenz-Hardware und ein großer Bildschirm zur Darstellung von Grafiken und anderen Präsentationsinhalten vorgesehen sein. Auch Reha-Dienstleistungen D6 und ärztliche Dienstleistungen D7 können durch die Ausgestaltung einer jeweiligen CAB bestmöglich unterstützt werden. Beispielsweise können Untersuchungs- und/oder Trainingsgeräte Bestandteile entsprechender CABs sein. Um Frisierdienstleistungen D8 bereitstellen zu können, kann beispielsweise ein Waschbecken, wie es in Friseursalons zum Haarewaschen üblich ist, ein 230V-Stecker zum Betreiben eines Haartrockners, ein großer Spiegel und ein höhenverstellbarer Frisierstuhl vorgesehen sein. Die vorgenannten CABs können über reversible mechanische Schnittstellen mechanisch fest und crash-sicher mit der Fahrlafette 10 verbunden werden. Um Energie- und Informationsflüsse zwischen der Fahrlafette 10 und der CAB zu gewährleisten, werden in Verbindung mit Figur 3 detailliert dargestellte reversible Schnittstellen vorgeschlagen.

Figur 2 zeigt eine schematische Darstellung eines Plattform-Ökosystems zur Veranschaulichung von Informationsflüssen bei der Realisierung der vorliegend offenbarten Technologie. Ein Micro-Service-Provider 14 individualisiert die CABs 1 der Servicemobile, welche anschließend mit einer jeweiligen Fahrlafette 10 (temporär oder dauerhaft) verbunden und bereitgestellt werden. Die Vermittlung der Servicemobile wird von einem Serviceprovider 13 übernommen, welcher über einen Auswerteeinheit, insbesondere einen Server 7 und beispielsweise einen Funkturm 8 eines Drahtloskommunikationsnetzwerkes den Bedarf der Anwender 12 ermittelt und mit den angebotenen Servicemobilen abgleicht. Bestmögliche Kombinationen aus angebotenem Servicemobil und interessiertem Anwender 12 führen zum einzelnen Vertragsabschluss über die Bereitstellung von Mobilitätsdienstleistung und einer CAB-spezifischen Dienstleistung. Der Micro-Service-Provider 14 kann auch die einzelne Dienstleistung bzw. ein Dienstleistungspaket vor dem Endkunden erbringen und hierzu den Betrieb des Servicemobils bzw. der CAB überwachen und sicherstellen oder gar an Bord des Servicemobils eine manuelle Dienstleistung in einem bemannten Servicemobil erbringen. Selbstverständlich muss der Serviceprovider 14 nicht identisch mit dem Hersteller/Ausstatter der CAB 1 sein. Diesbezüglich ergeben sich unterschiedliche Konstellationen zum Design, zur Erstellung und zur Verwendung der CABs bei der Dienstleistungserbringung vor dem Endkunden.

Figur 3 zeigt eine prinzipielle, perspektivische Skizze zur temporären Verbindung einer Fahrlafette 10 mit einer ersten CAB 1 oder einer zweiten CAB 2. Korrespondierend zueinander ausgestattete mechanische Schnittstellen 10a auf der Fahrlafette 10 und mechanische Schnittstellen 1a in den CABs 1, 2 sorgen für eine rasche und crash-sichere Verbindung zwischen CAB 1, 2 und Fahrlafette 10. Sofern Informationen und/oder Energie von der CAB 1, 2 zur Fahrlafette 10 oder anders herum ausgetauscht werden sollen, werden zusätzliche, zueinander korrespondierende Schnittstellen 1 b, 10b an den CABs 1, 2 und der Fahrlafette 10 angeordnet, welche ebenfalls in Richtung eines Pfeils P miteinander in Eingriff gebracht werden. Alternativ oder zusätzlich können in entsprechender Weise weitere oder alternative Schnittstellen zwischen den CABs 1, 2 und der Fahrlafette 10 miteinander in Eingriff gebracht werden. Beispielsweise können eine Heiz-/Kühlleistung, eine hydraulische Energie, Druckluft, etc., zwischen den CABs 1, 2 und der Fahrlafette 10 ausgetauscht werden. Die Schnittstellen können Informationstechnisch überwacht werden, so dass erst bei einer ordnungsgemäßen Kontaktierung der jeweiligen Schnittstellen und insbesondere einer entsprechenden Verriegelung der Schnittstellen eine Verwendung/Fahrt des Servicemobils ermöglicht wird. Während die dargestellten mechanischen Schnittstellen 10a der Fahrlafette 1 mit U- bzw. Schienenprofile ausgestaltet sind, welche mit beispielhaft dargestellten T-Profilen als Schnittstellen 1a der CABs 1, 2 in Eingriff gebracht werden können, versteht es sich von selbst, dass andere mechanische Schnittstellen möglich sind, welche gegebenenfalls in einer anderen Richtung als derjenigen des dargestellten Pfeils P miteinander in Eingriff zu bringen sind. Sofern die CABs 1, 2 jedoch aufgebockt in geeigneter Höhe gelagert werden können, kann die Fahrlafette 10 wie dargestellt selbsttätig unter die CAB 2 fahren, wobei die Schnittstellen 1b, 1a, 10b, 10a miteinander in Eingriff gebracht werden, ohne dass eine aufwendige Hebevorrichtung o.ä. erforderlich ist. Gegebenenfalls kann ein Luftfahrwerk der Fahrlafette 10 verwendet werden, um eine geringfügige Höhenanpassung vorzunehmen. Während im Rahmen der vorliegend offenbarten Technologie eine CAB nicht notwendiger Weise als Fahrgastzelle mit dienstleistungsspezifischer Inneneinrichtung verstanden werden muss, stellt dies eine geeignete Ausgestaltung der vorliegend offenbarten Technologie dar. Alternativ kann die CAB im Sinne der vorliegend offenbarten Technologie einen lediglich temporären Bestandteil der (integral mit der Fahrlafette 10 gefertigten) Fahrgastzelle darstellen. Bei dieser Ausgestaltung können die in Figur 3 dargestellten Schnittstellen (oder andere geeignete Schnittstellen) zwischen der CAB und der Fahrgastzelle angeordnet sein. Die Schnittstellen können beispielsweise am Dach und/oder in den Seitenwänden und/oder im Boden der CAB sowie der Fahrgastzelle angeordnet sein.

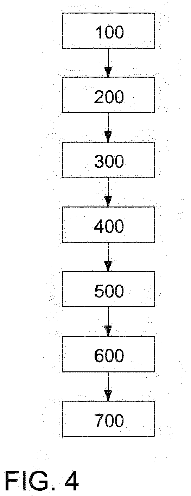

Figur 4 zeigt ein Flussdiagramm des erfindungsgemäßen Verfahrens. Ein erster Schritt 100 umfasst ein Ermitteln eines Bedarfs einer ersten Dienstleistung H1 auf der Route A-D. Dies erfolgt beispielsweise über eine Service-Bundle Datenbank auf einem Server 7. In einem zweiten Schritt 200 wird ein Bedarf zur Erbringung einer zweiten Dienstleistung H2 auf der Route (A-D) ermittelt. Die beiden ermittelten Dienstleistungen H1, H2 stellen ein Service-Bundle dar. In einem dritten Schritt 300 erfolgt ein Ermitteln eines geeigneten Ortes und/oder eines geeigneten Zeitpunkts für einen Konsumenten der ersten Dienstleistung H1 zum Umsteigen in die zweite CAB 2. Dieser Ort ist, in anderen Worten, der Ort des Wechsels von der Erbringung der ersten Dienstleistung H1 zur Erbringung der zweiten Dienstleistung H2 auf der Route A-D. In einem vierten Schritt 400 erfolgt ein automatisches Festlegen einer Reihenfolge zur Erbringung der ersten Dienstleistung H1 und der zweiten Dienstleistung H2 für die Route A-D. Ein fünfter Schritt 500 umfasst ein logisches Verknüpfen der ersten CAB 1 mit der zweiten CAB 2 zur, insbesondere umgebungssensorisch gestützten, Nahfeldnavigation, damit beide CABs 1,2 auf dem Parkplatz mithilfe der Fahrlafette aneinander heranfahren und ein sechster Schritt 600 umfasst ein automatisches Anordnen einer geöffneten Tür der ersten CAB 1 an einer geöffneten Tür der zweiten CAB 2. Ein siebter Schritt 700 umfasst ein automatisches Bereitstellen der Dienstleistung H2 in der zweiten CAB 2.

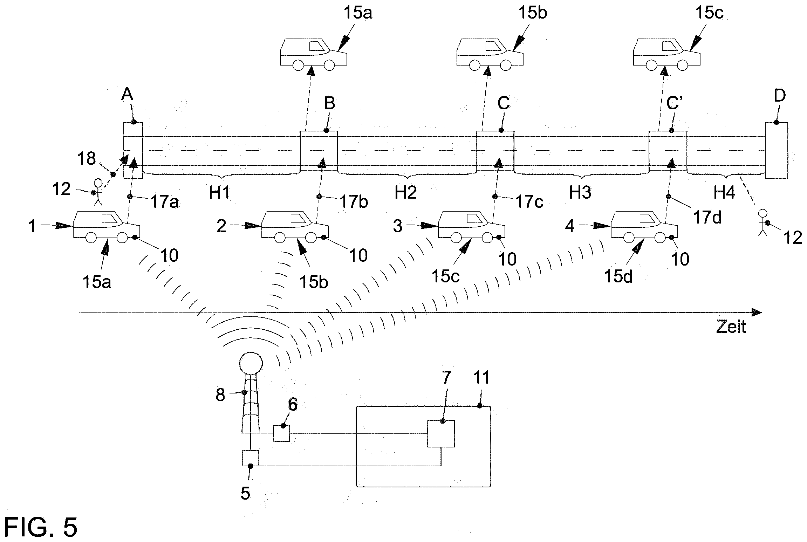

Figur 5 zeigt eine Ausführungsform der vorliegenden Erfindung, bei der ein Anwender 12 vier Dienstleistungen H1, H2, H3, H4 (H steht für Handover) während der Fahrt auf der bevorstehenden Route (auch "Wellness-Service-Bundle genannt") für eine bevorstehende Route A-D benutzt. Zuerst erstellt der Anwender 12 hierfür ein Service-Bundle, dessen Daten für die einzelnen Dienstleistungen H1, H2, H3, H4 auf dem Server 7 eines Serviceproviders 13 gespeichert werden.

Zunächst soll allerdings exemplarisch der konkrete Buchungsprozess und die Preiskalkulation für die Service-Bundles beschrieben werden. Im vorliegenden Fall bucht der Anwender 12 die Dienstleistungen Maniküre H1, Frisör H2 und Pediküre H3 und Pooling H4. Das zugehörige Service-Bundle ist durch die Reihenfolge der Dienstleistungen, deren Notwendigkeit und/oder durch die Anforderungen an den Handover-Ort A, B, C, C', D beschrieben. Für das hier dargestellte Wellness-Beispiel (Maniküre H1, Frisör H2, Pediküre H3 und Pooling H4) sieht dies wie folgt aus:
Zunächst ist die Reihenfolge offen. Eine Anforderung an den Handover-Ort A, B, C, C' D, welcher auf dem Server 7 hinterlegt wird, ist, dass die Straße befestigt sein muss. Als Vorbereitung für die Maniküre H1 müssen die Maniküreutensilien aus Schränken herausgeholt werden. Als Vorbereitung für den Frisör H2 muss das Wasser aufgewärmt werden und die Handtücher müssen herausgeholt werden. Für die Pediküre H3 müssen ebenso einzelne Utensilien aus Schränken herausgeholt werden. Anschließend wird das Service-Bundle mit den Bundle-Eigenschaften auf dem Server 7 in der Service-Bundle Datenbank gespeichert.

Als nächstes Erfolgt eine Erhebung von Sensor-Daten zur Bestimmung von Handover-Orts-Eigenschaften. Zur Aufnahme der Eigenschaften einzelner Streckensegmente für ihre Eignung für ein Handover eines Service-Bundles werden z.B. Sensoren aus der C2X Communication-Flotte verwendet. Wenn beispielsweise ein Fahrzeug der Flotte (Servicemobil 15) ein Straßensegment befährt, nehmen die Sensoren die Eigenschaften wie die Anzahl der Fahrzeuge und die Geschwindigkeit der Fahrzeuge auf.

Daraufhin folgt die Verarbeitung der Daten verschiedener Datenquellen für die Streckensegment-Datenbank auf dem Server 7. Neben den Sensordaten werden weitere Datenquellen zur Bewertung eines Streckensegmentes oder eines Ortes (Parkplatz) für ein Handover verwendet. Dazu werden beispielsweise Event-Kalender verwendet, um hieraus die Wahrscheinlichkeit für einen freien Parkplatz in gewissen Streckensegmenten für einen gewissen Zeitpunkt vorherzusagen. Die Kombination dieser Daten wird in einer Handover-Datenbank auf dem Server 7 gespeichert. Die Kommunikation der Servicemobile 15 der Fahrzeug-Flotte mit dem Service verläuft drahtlos und, wie bereits oben beschrieben, über einen Funkturm 8, der mit dem Server 7 des Serviceproviders 13 verbunden ist.

In einem nächsten Schritt werden die einzelnen Service-Bundles in einer Booking-Engine, welche sich auf dem Server befindet, gefiltert. Der Anwender 12 fragt im vorliegenden Fall eine Dienstleistung für eine Strecke von Hamburg nach Berlin (150 min) an. Nach Eingabe des Starts und des Ziels berechnet das System entsprechend der Fahrtdauer weitere Service-Bundles, deren Durchführungsdauer der Dauer der Gesamtfahrt entsprechen. Dabei kann es auch sein, dass bei der 150-minütigen Fahrt der Service "Maniküre" H1 mit einer Poolingfahrt H4 kombiniert wird. So erhält der Anwender 12 zunächst eine Maniküre H1 (45 min) und steigt anschließend aus, wobei er für die restliche Fahrt in einem Pooling-Fahrzeug mit einer vierten CAB 4 mit beispielsweise 7 Fahrgästen mitfährt.

Dementsprechend könnten für den Kunden folgende Bundles zur Verfügung stehen, welche folgendermaßen gestaltet sind:
Maniküre H1 (45 min) + Pooling H4 (105 min);
Pooling H4 (60 min) + Maniküre H1 (45 min) + Pooling H4 (45 min); oder
Maniküre H1 (45 min) + H2 (Frisör 45 min) + Pediküre H3 (45 min) + Pooling H4 (15 min).

Auf Basis der zur Verfügung stehenden CABS 1, 2, 3, 4 werden die Servicekombinationen dargestellt. Dabei kann durch die Wahl der Reihenfolge der Services H1-H4 die Verfügbarkeit und die Auslastung der einzelnen Fahrzeuge 15a-15d erhöht werden.

Dargestellte Service-Bundles:
Maniküre H1 (45 min) + Pooling H4 (120 min); oder
Pooling H4 (60 min) + Maniküre H1 (45 min) + Pooling H4 (60 min).

Als nächstes erfolgt auf dem Server 7 des Serviceproviders 13 eine Preiskalkulation der einzelnen Service-Bundles. Der Server 7 befindet sich innerhalb der erfindungsgemäßen Einrichtung 11. Die mit dem Funkturm 8 verbundene Einrichtung 11 verfügt über oben beschriebenen Dateneingang 5 und einen Datenausgang 6. Auf Basis eines Fittings zwischen den einzelnen Services wird ein weiterer individueller Preis kalkuliert. Dabei wird der Preis für die Fahrt/Service-Kombination erhöht, wenn einzelne Serviceanbieter zusätzliche Umwege zum Handover-Ort, A, B, C, C', D fahren müssen. Die Standardpreise für die folgenden Services lauten:
Maniküre H1 (45 min) + Pooling H4 (120 min) = 50 €; oder
Maniküre H1 (45 min) + Frisör H2 (45 min) + Pediküre H3 (45 min) + Pooling H4 (30 min) = 70 €.

Auf Basis der Verfügbarkeit der einzelnen Service-CABs 1-4 und der notwendigen Umwege werden folgende Preise berechnet:
Maniküre H1 (45 min) + Pooling H4 (120 min) = 50 € -> 55 €; oder
Maniküre H1 (45 min) + Frisör H2 (45 min) + Pediküre H3 (45 min) + Pooling H4 (30 min) = 70 € -> 90 €.

Der Anwender 12 wählt das Service-Bundle 2 (Maniküre H1 (45 min) + Friseur H2 (45 min) + Pediküre H3 (45 min) + Pooling H4 (30 min)) bedarfsgerecht aus.

Als nächstes erfolgt eine Kalkulation des jeweiligen Handover-Ortes A, B, C, C', D mit einer Navigation-Engine. Nachdem der Anwender 12 den Maniküre Service H1 ausgewählt hat, kalkuliert das System nun den optimalen Ort A für das Handover. Dabei werden Servicedauer, Fahrtdauer, Routen, Verfügbarkeit der CABS 1,2,3,4, der aktuelle Standort der CABs und die Anforderungen an den Ort betrachtet.

Danach erfolgt die Übertragung des Service-Status aus CAB 1. Zur Optimierung des Handover überträgt das CAB 1 Daten an den Server 7, welche für die anderen CABs 2-4 zur Disposition stehen. Hierzu zählen: Fortschritt des Service H1, Position und Hinweise zum Service für den Folge-Service.

Im vorliegenden Fall gemäß Figur 5 ist der Handover-Ort A in Hamburg für den Einstieg des Anwenders in die CAB 1 zur Maniküre H1 auch zugleich der Start der Route A-D. Der Anwender 12 gelangt über den gestrichelt eingezeichneten Weg 18 zum Handover, während das vorbereitete Maniküre-Servicemobil 15a zum Handover-Ort A über die Strecke 17a navigiert wird. Die Maniküre Dienstleistung H1 wird bis zum Handover-Ort B erbracht, wo der Anwender 12 in das Frisörservicemobil 15b mit der zweiten CAB 2 einsteigt, das über die Strecke 17b zum Handover-Ort B gelangt. Hierbei werden vor dem Handover dem Serviceprovider 13 der zweiten CAB 2 die Daten zu dem vorherigen Service H1 angezeigt. Das Handover wird hierbei an dem Ort durchgeführt, der die o.g. Anforderungen erfüllt. Nach diesem Ablauf wird auch das Handover am Handover-Ort C an den Pediküreservice H3 durchgeführt, nachdem das Pediküreservicemobil 15c mit der Pediküre-CAB 3 über Strecke 17c zum Handover-Ort navigiert wurde. Nach diesem Schema erfolgt die Übergabe an das Pooling-CAB 4 in dem Pooling Servicemobil 15d am Handover-Ort C', bis der Anwender schließlich am Handover-Ort D, in Berlin, angelangt und damit das Ziel erreicht hat.

### Bezugszeichenliste

- 1: erste CAB
- 1a: mechanische Schnittstelle der CAB
- 1b: informationstechnische/energetische Schnittstelle der CAB
- 2: zweite CAB
- 3: dritte CAB
- 4: vierte CAB
- 5: Dateneingang
- 6: Datenausgang
- 7: Server
- 8: Funkturm
- 10: Fahrlafette
- 10a: mechanische Schnittstelle der Fahrlafette
- 10b: energetische/informationstechnische Schnittstelle der Fahrlafette
- 12: Anwender
- 13: Serviceprovider
- 14: Micro-Service-Provider
- 15a: Servicemobil
- 15b: Servicemobil
- 15c: Servicemobil
- 15d: Servicemobil
- 17a: Route zum Handover-Ort
- 17b: Route zum Handover-Ort
- 17c: Route zum Handover-Ort
- 17d: Route zum Handover-Ort
- 18: Anwenderroute zum ersten Handover-Ort
- A-D: Handover-Orte
- D1-D8: Dienstleistungen
- H1-H4: Dienstleistungen auf einer bevorstehenden Route

## Patentansprüche

1. Verfahren zur Unterstützung einer Erbringung einer vordefinierten ersten Dienstleistung (H1) in einem Servicemobil (15a, 15b, 15c, 15d) während einer Fahrt des Servicemobils (15a, 15b, 15c, 15d) auf einer bevorstehenden Route (A-D) umfassend die Schritte:
- Ermitteln (100) eines Bedarfes zur Erbringung der ersten Dienstleistung (H1) auf der Route (A-D),
- Automatisches (700) Bereitstellen einer für die Erbringung der Dienstleistung (H1) eingerichteten Kabine (1), nachfolgend "CAB" genannt, eines Servicemobils (15a, 15b, 15c, 15d) zur Erbringung der ersten Dienstleistung (H1) nachfolgend auf einen Zwischenstopp (A, B, C, C', D) entlang der Route (A-D).

2. Verfahren nach Anspruch 1 weiter umfassend
- Ermitteln (200) eines Bedarfes zur Erbringung einer zweiten Dienstleistung (H2) auf der Route (A-D) und
- automatisches Festlegen (400) einer Reihenfolge zur Erbringung der ersten Dienstleistung (H1) und der zweiten Dienstleistung (H2) für die Route (A-D).

3. Verfahren nach Anspruch 2, wobei die erste Dienstleistung (H1) in einer ersten CAB (1) und die zweite Dienstleistung (H2) in einer zweiten CAB (2) erbracht werden.

4. Verfahren nach Anspruch 3 weiter umfassend
- logisches Verknüpfen (500) der ersten CAB (1) mit der zweiten CAB (2) zur, insbesondere umgebungssensorisch gestützten, Nahfeldnavigation und/oder
- automatisches Anordnen (600) einer geöffneten Tür der ersten CAB (1) an einer geöffneten Tür der zweiten CAB (2).

5. Verfahren nach einem der Ansprüche 2 bis 4, wobei die Reihenfolge in Abhängigkeit
- einer Verfügbarkeit für die erste (H1) und die zweite Dienstleistung (H2) eingerichteter CABs (1, 2) entlang der Route (A-D) und/oder
- einer erforderlichen Vorbereitungszeit zur Erbringung der zweiten Dienstleistung (H2) und/oder
- einer Natur der Dienstleistungen (H1, H2) und/oder
- einer für die Dienstleistung (H1, H2) geschätzten Dauer und/oder
- einer für die Dienstleistung (H1, H2) erforderlichen Infrastruktur und/oder
- einer momentanen verkehrsmäßigen Streckeneigenschaft
festgelegt wird.

6. Verfahren nach einem der vorstehenden Ansprüche, wobei der Zwischenstopp in Abhängigkeit
- einer Verfügbarkeit einer Kommunikationsinfrastruktur
- eine Lärm- und/oder Lichtemission und/oder
- Wärmeemissionen, insbesondere Temperatur, und/oder
- Luftfeuchtigkeit, insbesondere Regen oder Nebel, und/oder
- Emissionen in Abhängigkeit der Uhrzeit, Jahreszeit und/oder
- Personenaufkommen
entlang der Route (A-D) gekennzeichnet ist.

7. Verfahren nach einem der Ansprüche 2 bis 6 weiter umfassend
- Ermitteln (300) eines geeigneten Ortes und/oder eines geeigneten Zeitpunktes für einen Wechsel eines Konsumenten der ersten Dienstleistung (H1) in die zweite CAB (2).

8. Verfahren nach einem der Ansprüche 2 bis 7, wobei die erste Dienstleistung (H1) eine UV- und/oder IR-Bestrahlung eines Anwenders (12) und die zweite Dienstleistung (H2) eine Körperreinigung des Anwenders (12) umfasst, und/oder
- wobei die erste Dienstleistung (H1) eine Körperreinigung eines Anwenders (12) und die zweite Dienstleistung (H2) eine kosmetische und/oder eine Wellness-Behandlung des Anwenders (12) umfasst und/oder
- wobei die erste Dienstleistung (H1) eine Nagelpflege eines Anwenders (12) und die zweite Dienstleistung (H2) eine Körperreinigung des Anwenders (12) umfasst.

9. Verfahren nach einem der vorstehenden Ansprüche weiter umfassend
- Ermitteln (800) einer Verzögerung eines potentiellen Beginns der Erbringung der ersten Dienstleistung (H1) und im Ansprechen darauf
- automatisches Festlegen (900) eines aktualisierten Zwischenstopps (A, B, C, C', D) entlang der Route (A-D).

10. Einrichtung (11) zur Unterstützung einer Erbringung einer vordefinierten ersten Dienstleistung (H1) in einem Servicemobil (15a, 15b, 15c, 15d) während einer Fahrt des Servicemobils (15a, 15b, 15c, 15d) auf einer bevorstehenden Route (A-D) umfassend
- einen Dateneingang (5)
- eine Auswerteeinheit (7) und
- einen Datenausgang (6), wobei
die Auswerteeinheit (7) eingerichtet ist,
- in Verbindung mit dem Dateneingang (5) einen Bedarf zur Erbringung der ersten Dienstleistung (H1) auf der Route (A-D) zu ermitteln, und
- in Verbindung mit dem Datenausgang (6) automatisch eine für die Erbringung der Dienstleistung eingerichtete Kabine (1, 2, 3, 4), nachfolgend "CAB" genannt, eines Servicemobils (15a, 15b, 15c, 15d) zur Erbringung der ersten Dienstleistung (H1) nachfolgend auf einen Zwischenstopp (A, B, C, C', D) entlang der Route (A-D) bereitzustellen.

11. Computerprogrammprodukt umfassend Instruktionen, welche, wenn sie auf einer Auswerteeinheit (7) einer Einrichtung (11) ausgeführt werden, die Einrichtung (4) veranlassen, die Schritte eines Verfahrens gemäß einem der vorstehenden Ansprüche 1 bis 9 auszuführen.

12. Signalfolge repräsentierend Instruktionen, welche, wenn sie auf einer Auswerteeinheit (9) einer Einrichtung (11) ausgeführt werden, die Einrichtung (11) veranlassen, die Schritte eines Verfahrens gemäß einem der vorstehenden Ansprüche 1 bis 9 auszuführen.

13. Servicemobil, insbesondere umfassend eine Fahrlafette (10) und eine reversibel mit der Fahrlafette (10) verbundene dienstleistungsspezifisch ausgestaltete Fahrgastzelle, nachfolgend "CAB (1, 2, 3, 4)" genannt, welches eine Einrichtung (11) gemäß Anspruch 10 aufweist.
